(19) **Europäisches Patentamt**

**European Patent Office**

**Office européen des brevets**

(11) Veröffentlichungsnummer: **0 135 064**
**B1**

(12) ## EUROPÄISCHE PATENTSCHRIFT

(45) Veröffentlichungstag der Patentschrift:
**22.06.88**

(51) Int. Cl.⁴: **B 23 F 5/12**

(21) Anmeldenummer: **84108825.5**

(22) Anmeldetag: **25.07.84**

(54) **Werkzeugmaschine zur Herstellung schrägverzahnter Zahnräder.**

(30) Priorität: **10.08.83 DE 3328904**

(43) Veröffentlichungstag der Anmeldung:
**27.03.85 Patentblatt 85/13**

(45) Bekanntmachung des Hinweises auf die Patenterteilung:
**22.06.88 Patentblatt 88/25**

(84) Benannte Vertragsstaaten:
**CH FR GB IT LI**

(56) Entgegenhaltungen:
**DE - A - 3 131 381**
**DE - B - 1 627 364**
**DE - B - 2 042 929**

(73) Patentinhaber: **Liebherr-Verzahntechnik GmbH,**
**Postfach 1960, D-8960 Kempten (DE)**

(72) Erfinder: **Okaya, Orkan, Oberm Illerfeld 16,**
**D-8960 Kempten (DE)**

(74) Vertreter: **Klunker, Hans-Friedrich, Dr. et al,**
**Patentanwälte Klunker . Schmitt-Nilson . Hirsch**
**Winzererstrasse 106, D-8000 München 40 (DE)**

ACTORUM AG

**Beschreibung**

Die Erfindung betrifft eine Werkzeugmaschine zur Herstellung schrägverzahnter Zahnräder, insbesondere Stossmaschinen mit einem Schneidrad, mit einem Werkzeug und einem mit dem Werkzeug in Eingriff kommenden Werkstückrad, die durch getrennte Motoren angetrieben und elektronisch gekoppelt, eine Abwälzbewegung um parallele Rotationsachsen ausführen, wobei die Drehung über je eine Schnecke und je ein drehfest mit Werkzeug und Werkstück verbundenes Teilrad eingeleitet wird und wobei das Werkzeug zusätzlich eine hin- und hergehende Hubbewegung ausführt, der noch eine mechanisch erzeugte harmonische Drehbewegung überlagert ist.

Zur Herstellung von schrägverzahnten Stirnrädern wird üblicherweise die das Schneidrad tragende Stossspindel in einer Büchse geführt, die beim Durchlaufen der Spindel diese um bis zu 30° verdreht. Die Verdrehung wird durch eine Kulissenführung in der Büchse, die mit entsprechenden an der Spindel befestigten Nocken zusammenwirkt, erzeugt.

Der Winkel der Schrägführung errechnet sich aus Hublänge, Schrägungswinkel am Werkstück, Durchmesser des Werkzeugs und Durchmesser der Führungsbüchse. Bei Änderung einer dieser Einflussgrössen muss daher die Büchse ausgebaut bzw. gewechselt werden. Die dafür benötigte Rüstzeit ist verständlicherweise nachteilig, so dass allgemein das Bedürfnis besteht, die unterschiedlichen Schrägungswinkel am Werkstück durch eine entsprechende Steuerung der Drehbewegung zu bewältigen. Die Hauptschwierigkeit liegt dabei nicht in der Problematik der Steuerung, sondern in der Dynamik des Antriebs. Bei einer Hubzahl von etwa 1800 Hüben pro Minute und einer Hublänge von etwa 30 bis 50 mm treten infolge der hohen Geschwindigkeiten Trägheitskräfte auf, die von einem umsteuerbaren Motor nicht aufgefangen werden können. Ein solcher Motor müsste mit einer Frequenz von 30 Hz umgesteuert werden, wobei die trägen Massen nicht nur jeweils abgefangen, sondern zusätzlich mit hoher Ganggenauigkeit bewegt werden müssten. Wegen der oben dargelegten Problematik ist es bisher auch noch nicht gelungen, diese Büchse bei NC-Maschinen durch eine elektronische Kopplung zu ersetzen.

Auch die weiterhin naheliegende Lösung einer mechanisch verstellbaren Büchse bzw. eines entsprechenden Getriebes ist wegen der hohen Anforderungen an die Genauigkeit einerseits und der grossen zu bewältigenden trägen Massen andererseits nicht realistisch. Eine Beherrschung der Verformung infolge der hohen auftretenden Kräfte und der Spiele beim Reversieren würden einen derartigen konstruktiven Aufwand erfordern, der im Hinblick auf den zweifelhaften Erfolg nicht gerechtfertigt werden kann.

Aus der DE-B 2 042 929 ist bekannt, eine Maschine zu schaffen, die unter Vermeidung komplizierter Veränderungen eine vielseitige Steuerung der momentanen relativen Drehwinkelstellung von Schneidrad und Werkstückrad gestattet. In dieser Druckschrift wird die Lehre wiedergegeben, dass eine Steuerung der Antriebe über einen Rechner erfolgt, so dass die Antriebe rein steuerungsmässig gekoppelt sind.

Der Erfindung liegt daher die Aufgabe zugrunde, die Umrüstzeiten, die durch das Auswechseln der festen Büchsen bei herkömmlichen Werkzeugmaschinen der eingangs beschriebenen Art auftreten, zu reduzieren bzw. das Auswechseln der Büchsen für verschiedene Schrägungswinkel am Werkstück durch eine entsprechende Steuerung der Spindel überflüssig zu machen.

Erfindungsgemäss wird diese Aufgabe durch die Merkmale des Anspruchs 1 gelöst. Der Kern der Erfindung ist darin zu sehen, dass zunächst eine gewisse harmonische Drehbewegung der Spindel, beispielsweise auf konventionelle Art und Weise durch eine Büchse für mittlere Schrägungswinkel erzeugt wird. Diese harmonische Drehbewegung kann dann auf elektronische Art und Weise entweder noch verstärkt oder auch vermindert werden. Der Bereich, in dem eine elektronische Korrektur möglich ist, beträgt etwa ± 5°. Bei Einsatz einer 30°-Büchse könnten damit Schrägungswinkel von 25 bis 35° erzeugt werden, ohne dass die Maschine zum Umrüsten stillgesetzt werden müsste. Da die Schrägungswinkel in der Praxis nur über einen geringen Winkelbereich differieren, können so die meisten der schrägverzahnten Stirnräder ohne Umrüsten der Stossmaschine erzeugt werden. Es ist darüberhinaus auf einfachste Weise möglich, Verformungen und geometrisch bedingte Zusatzdrehungen infolge von Gelenkbewegungen zu kompensieren.

Gemäss einer vorteilhaften Weiterbildung der Erfindung kann eine gewisse Grundgrösse der zusätzlichen, der Spindel überlagerten harmonischen Drehbewegung auch dadurch erzeugt werden, dass die Schnecke, die über ein Teilrad der Spindel die Drehbewegung für den Wälzvorschub erteilt, im Takt der Hubbewegung axial hin- und herbewegt wird. Die Schnecke wirkt in diesem Fall als eine Art Zahnstange. Die axial hin- und hergehende Bewegung der Schneckenwelle wird vorteilhaft von der Hauptantriebswelle des Kurbeltriebes der das Werkzeug tragenden Spindel abgeleitet.

Es ist vorteilhaft, wenn zur Erzeugung der gewünschten zusätzlichen harmonischen Drehbewegung der Spindel sowohl die Schneckenwelle axial hin- und herbewegt wird, als auch eine Büchse mit einer gewissen Schrägführung eingesetzt wird. Nur die Abweichung dieser überlagerten Bewegung von der Soll-Bewegung der Spindel braucht dann noch elektronisch kompensiert zu werden, dies erfolgt durch Aufnahme der Ist-Stellung der Spindel und der Ist-Stellung der Schnecke. Beide Grössen werden in einem Mikroprozessor in eine Steuergrösse umgesetzt, die dem Antriebsmotor für die Schneckenwelle zugeführt wird. Durch eine entsprechende harmonische Beschleunigung bzw. Verzögerung der

Grunddrehung der Schneckenwelle, die für den Wälzvorschub benötigt wird, kann auf diese Weise exakt die zusätzliche harmonische Drehbewegung erzeugt werden, die für einen bestimmten Schrägungswinkel am Werkstück erforderlich ist. In der Regel wird die Korrekturgrösse so gering sein, dass sie von dem umsteuerbaren Motor ohne Schwierigkeiten bewältigt werden kann.

Für den Fall, dass die Erfindung bei Schleifmaschinen eingesetzt werden soll, wird der die Schneckenbewegung erzeugende Kurbeltrieb vorzugsweise von einem separaten Motor angetrieben, der synchron zur Hubbewegung arbeitet, welche in diesem Fall nicht das Werkzeug, sondern das auf dem Tisch festgespannte Werkstück ausführt.

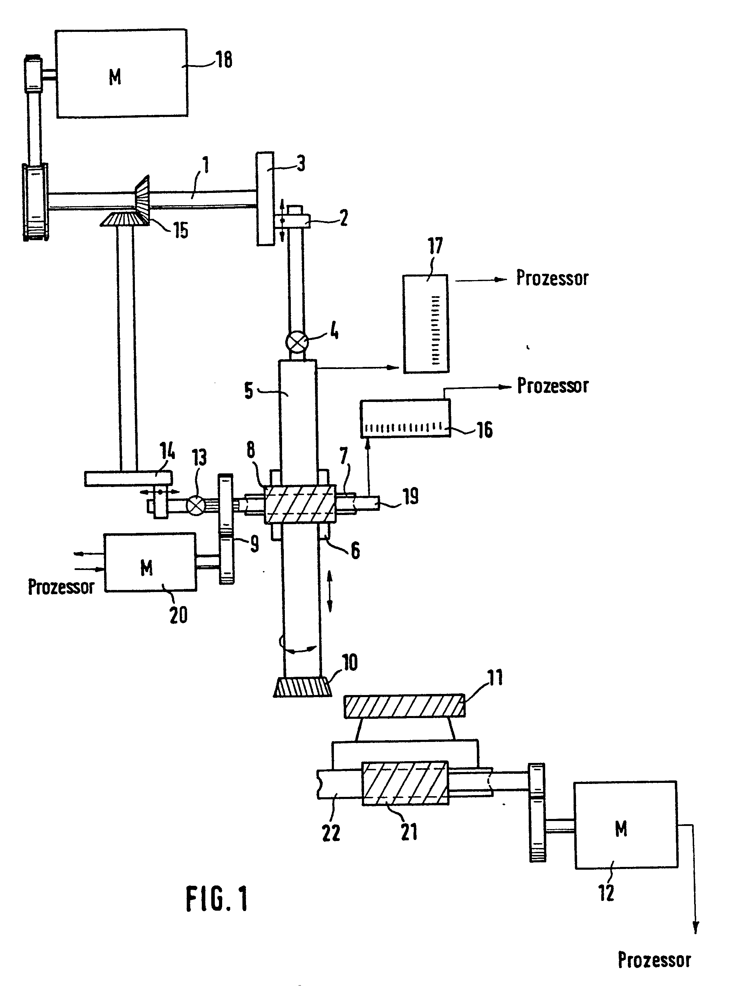

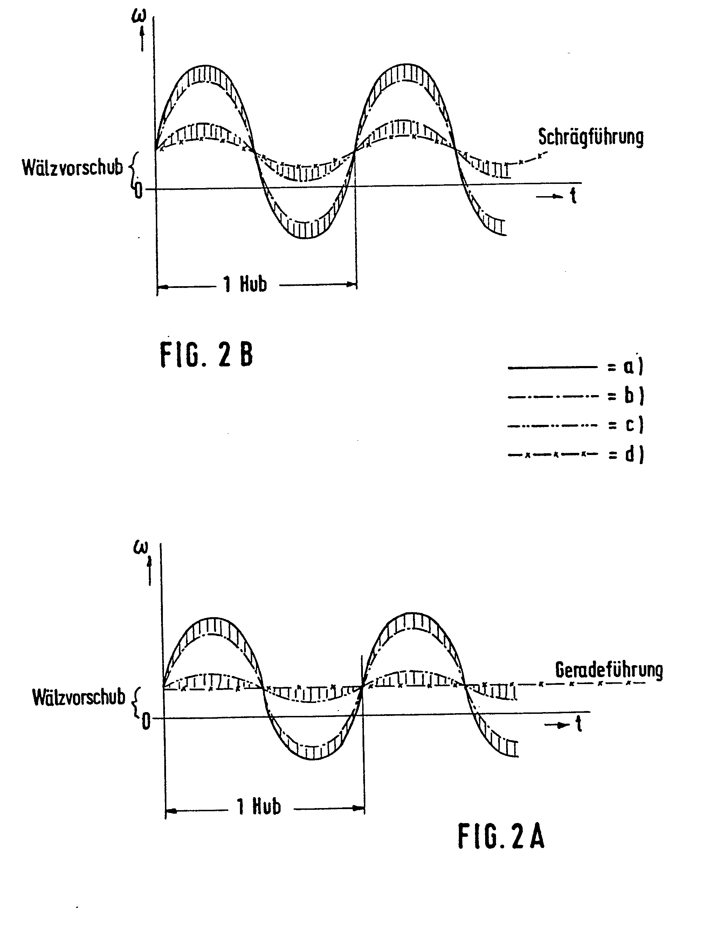

Nachfolgend wird die Erfindung anhand eines Ausführungsbeispiels unter Bezugnahme auf die Figuren 1 und 2 näher erläutert. Es zeigen:

Fig. 1 eine schematisierte Darstellung der Funktionselemente einer Stossmaschine,

Fig. 2A den Bewegungsablauf des Werkzeuges mit axial bewegter Schnecke und elektronischer Korrektur und

Fig. 2B den Bewegungsablauf des Werkzeugs bei axial bewegter Schnecke, Verwendung einer Schrägführungsbüchse und elektronischer Korrektur.

Die Funktion einer Wälzstossmaschine wird als bekannt vorausgesetzt. Auf einem Tisch ist das Werkstückrad 11 aufgespannt. Mit der Peripherie des Werkstückrades 11 kommt das Schneidrad bzw. Werkzeug 10 in Eingriff. Das Werkzeug 10 ist an der Spindel 5 befestigt, die von dem Kurbeltrieb 2 axial auf- und abbewegt wird. Die Bewegung des Kurbeltriebes 2 wird über Kugelgelenk 4 auf die Spindel übertragen. Die Hublänge des Kurbeltriebs 2 wird über die Verstellung der Exzentrizität des Kurbeltriebes erreicht. Die Verstellmöglichkeit ist mit Ziffer 3 angedeutet. Der Kurbeltrieb wird von der Hauptantriebswelle 1 und dem Motor 18 angetrieben.

In der Büchse 6 ist eine Kulissenführung ausgebildet, die der Spindel eine mit der Hubzahl synchronisierte harmonische Drehbewegung erteilt. Drehfest auf der Büchse 6 ist ein Teilrad 7 angeordnet, das mit der Schnecke 8 kämmt. Die Schnecke 8 ist auf Schneckenwellen 19 aufgespannt und axial verschieblich gelagert. Die Schneckenwelle 19 ist einseitig mit einer Teilverzahnung ausgerüstet, auf der ein Radsatz 9 axial verschieblich angeordnet ist. Die Schneckenwelle wird von Motor 20 über den Radsatz 9 angetrieben.

Über auf der Hauptantriebswelle angeordnete Kegelräder 15 wird ein Kurbeltrieb 14 angetrieben, dessen Hublänge über einen verstellbaren Exzenter justierbar ist. Der Kurbeltrieb ist über ein Universalgelenk, das eine momentenfreie Axialkraftübertragung ermöglicht, mit der Schneckenwelle 19 gekoppelt. Bei Drehung der Hauptantriebswelle 1 wird daher die Schneckenwelle 19 synchron zum Hubtakt hin- und herbewegt. Die auf der Schneckenwelle 19 montierte Schnecke 8 wirkt dabei wie eine Zahnstange und dreht die Spindel 5 im Hubtakt vor und zurück. Diese harmonische Drehbewegung ist der auf- und abgehenden Hubbewegung der Spindel bzw. des Schneidrades überlagert.

Zur Wälzkopplung zwischen Schneidrad 10 und Werkstückrad 11 wird letzteres über Motor 12, Schnecke 21 und Teilrad 22 gedreht. Gleichermassen wird die Spindel 5 über Motor 20, Radsatz 9 und Schnecke 8 in eine entsprechende gegensinnige Drehung versetzt, so dass beim Eintauchen der Spindel 5 in die Peripherie des Werkstückrades 11 die gewünschte Flankenform durch aufeinanderfolgende Hüllschnitte erzeugt wird. Die beiden Antriebsmotoren 12 und 20 können elektronisch über eine fest verdrahtete Schaltung oder auch einen programmgesteuerten Mikroprozessor verbunden sein. Eine derartige elektronische Kopplung ist bekannt, sie ist beispielsweise Gegenstand der älteren deutschen Patentanmeldung P 3 136 390.3. Sie ist beispielsweise auch in Annals of the CIRP, Vol. 31/1/1982, Seite 247–249 beschrieben.

Die Wirkung der elektronischen Korrektur soll nun unter Bezugnahme auf die Fig. 2A und 2B näher erläutert werden.

In Fig. 2A ist die Abszisse die Zeitachse und die Ordinate die Winkelgeschwindigkeit der überlagerten periodischen Drehbewegung der Spindel, wie sie zur Erzeugung des Schrägungswinkels der Zähne am Werkstückrad erforderlich ist. Die Kurve d stellt dabei die Grund-Winkelgeschwindigkeit der Spindel dar, die diese aufgrund des Wälzvorschubs ausführt. Die Büchse 6 hat in diesem Fall nur eine Geradführung, d.h. der Spindel 5 wird beim Durchlaufen der Büchse 6 keinerlei Zusatzdrehung aufgeprägt. Die Kurve b zeigt nun die periodische Ist-Winkelgeschwindigkeit der Spindel, die dieser aufgrund der axial oszillierenden Bewegung der Schneckenwelle 19 aufgeprägt wird.

Die Kurve a zeigt den Soll-Verlauf der periodischen Winkelgeschwindigkeit des Schneidrades 10 zur Erzeugung der korrekten Schrägung ohne irgendwelche Zusätze. Die Differenz zwischen den beiden Kurven a und b muss nun elektronisch kompensiert werden.

Zu diesem Zweck ist ein Messsystem 17 vorgesehen, das den Ist-Wert der Hubstellung der Stossspindel 5 feststellt und an einen Prozessor weiterleitet. Weiterhin ist ein Messsystem 16 vorgesehen, welches die axiale Ist-Stellung der Schneckenwelle 19 bzw. der Schnecke 8 feststellt und ebenfalls an den Prozessor weitergibt. Der Prozessor errechnet nun aus diesen beiden Ist-Grössen und der einprogrammierten Soll-Grösse, die der Kurve a in Fig. 2A entspricht, eine Korrekturgrösse, die über eine nicht gezeigte Steuereinheit dem Motor 20 aufgegeben wird. Die Korrekturgrösse hat nun wieder die Form einer harmonischen Drehbewegung, die der Grunddrehung des Motors überlagert wird. Die harmonisch verlaufende Korrekturgrösse wird durch die Kurve c dargestellt. Die Kurven b und c addieren sich zur gewünschten Soll-Winkelgeschwindigkeit a. Obwohl nicht massstäblich dargestellt, ist es klar ersichtlich, dass die Korrekturgrösse vergleichsweise klein ist, so dass bei Umsteuerung des Motors entsprechend kleinere Trägheitskräfte bewältigt werden müssen. Es wäre technisch nicht realisierbar, wenn beispielsweise Motor 20 gemäss Kurve a umgesteuert werden müsste.

Fig. 2B zeigt im Prinzip die gleiche Anordnung, jedoch mit der zusätzlichen Massnahme, dass die Büchse 6 eine Schrägführung aufweist, welche durch formschlüssigen Eingriff mit der Spindel dieser eine harmonische Drehbewegung aufträgt. Diese Bewegung ist als Kurve d dargestellt. Sie kann im Hinblick auf die zusätzlich angewendete Massnahme einer axialen Oszillation der Schneckenwelle und die elektronische Korrektur gering gehalten werden. Die Kurve d, b und c addieren sich wieder zum gewünschten Soll-Verlauf der harmonischen Drehbewegung a.

## Patentansprüche

1. Werkzeugmaschine zur Herstellung schrägverzahnter Zahnräder, insbesondere Stossmaschinen mit einem Schneidrad, mit einem Werkzeug (10) und einem mit dem Werkzeug (10) in Eingriff kommenden Werkstückrad (11), die beide elektronisch gekoppelt und durch getrennte Motoren (12, 18) angetrieben eine Abwälzbewegung um parallele Rotationsachsen ausführen, wobei die Drehung über je eine Schnecke (21, 8) und je ein drehfest mit Werkzeug (10) und Werkstück (11) verbundenes Teilrad eingeleitet wird und wobei das Werkzeug zusätzlich eine hin- und hergehende Hubbewegung ausführt, der eine mechanisch erzeugte harmonische Drehbewegung überlagert ist, dadurch gekennzeichnet, dass der exakte Soll-Wert der harmonischen Drehbewegung des Werkzeugs mechanisch nur näherungsweise erzeugt wird und dass ein erstes Messsystem (17) zur Messung der axialen Stellung des die Hubbewegung ausführenden Werkzeugs (10) und ein zweites Messsystem (16) zur Messung der Stellung der zugeordneten Schnecke (8) vorgesehen sind, dass weiterhin ein Prozessor vorgesehen ist, der abhängig von der Ist-Stellung des die Hubbewegung ausführenden Werkzeugs (10) eine Soll-Stellung der Schnecke (8) errechnet und ein entsprechendes Korrektursignal bildet, welches einer Steuereinheit für den Antriebsmotor (20) der Schnecke (8) zugeführt wird, wodurch die Drehzahl der Schnecke (8) entsprechend erhöht oder vermindert wird, so dass die exakte Soll-Stellung der harmonischen Drehbewegung des Wekzeugs (10) erreicht wird.

2. Werkzeugmaschine nach Anspruch 1, dadurch gekennzeichnet, dass die Schnecke (8) auf einer axial verschieblichen Schneckenwelle (19) gelagert ist, welcher über einen verstellbaren Kurbeltrieb (14) eine hin- und hergehende Bewegung synchron zur Hubbewegung von Werkzeug oder Werkstück erteilt wird, wobei der Hub des Kurbeltriebs (14) so bemessen ist, dass durch das Zusammenwirken von axial bewegter Schnecke (8) und Teilrad (7) eine zusätzliche harmonische Drehbewegung erzeugt wird.

3. Werkzeugmaschine nach Anspruch 1, dadurch gekennzeichnet, dass das die Hubbewegung ausführende Element an einer Spindel (5) befestigt ist, die in einer Büchse (6) läuft, welche mit dem Teilrad (7) drehfest verbunden ist und die eine Kulissenführung aufweist, durch welche der Spindel (5) während ihrer Hubbewegung eine zusätzliche harmonische Drehbewegung aufgeprägt wird.

4. Werkzeugmaschine nach Anspruch 2 oder 3, dadurch gekennzeichnet, dass zur Erzeugung der zusätzlichen harmonischen Drehbewegung die Büchse (6) und die axial verschiebliche Schnecke (8) zusammenwirken.

5. Werkzeugmaschine nach einem der Ansprüche 2 bis 4, dadurch gekennzeichnet, dass der Kurbeltrieb (14) mechanisch mit der Antriebswelle (1) des Kurbeltriebs (3) für die Hubwegung gekoppelt ist.

6. Werkzeugmaschine nach einem der Ansprüche 2 bis 4, dadurch gekennzeichnet, dass der Kurbeltrieb (14) von einem regelbaren Antrieb angetrieben wird, der synchron zur Antriebswelle (1) arbeitet.

## Claims

1. Machine tool for the manufacture of obliquely toothed wheels particularly shaping machine with a cutting wheel, with a tool (10) and a workpiece (11) which comes into engagement with the tool (10) which are both electronically coupled and driven by separate motors (12) and (18) and carry out a rolling off movement about parallel rotational axes, wherein the turning is introduced in each case via a worm (21), (8) and a partial wheel connected rotationally fixed relative to the tool (10) and workpiece (11) and wherein the tool additionally carries out a to and fro stroke movement which is overlaid by a mechanically generated harmonic rotation movement, characterised in that the desired value for the harmonic rotational movement of the tool is generated mechanically only approximately and that a first measuring system (17) for measurement of the axial position of the tool (10) carrying out the axial movement and a second measuring system (16) for measurement of the position of the worm (8) attached thereto are provided, that furthermore a processor is provided which dependent on the actual value of the tool (10) carrying out the stroke movement calculates a desired position of the worm (8) and forms a corresponding correction signal, which is fed to a control unit for the drive motor (20) of the worm (8), whereby the rotational speed of the worm (8) is correspondingly raised or lowered, so that the exact desired position of the harmonic rotational movement of the tool (10) is achieved.

2. Machine tool acordingly to claim 1 characterised in that the worm (8) is mounted on an axially slidable worm shaft (19) which is provided via an adjustable crank drive (14) with a to and fro movement synchronous to the stroke movement of the tool or the workpiece, wherein the stroke of the crank drive (14) is so dimensioned that by the co-operation of axially moved worm (8) and partial wheel (7) an additional harmonic rotational movement is generated.

3. Machine tool according to claim 1 characterised in that the element carrying out the stroke movement is fixed to an arbor (5) which runs in a bush (6) which is rotationally fixed relative to the partial wheel (7) and which has a slide guide through which the arbor (5) has impressed on it during its stroke movement an additional harmonic rotational movement.

4. Machine tool according to claim 2 or 3 characterised in that for generation of the additional harmonic rotational movement, the bush (6) and the axially slideable worm (8) co-operate.

5. Machine tool according to one of claims 2 to 4 characterised in that the crank drive (14) is mechanically coupled with the drive shaft (1) of the crank drive (3) for the stroke movement.

6. Machine tool according to one of claims 2 to 4 characterised in that the crank drive (14) is driven by a controllable drive which works synchronously to the drive shaft (1).

**Revendications**

1. Machine-outil pour la fabrication de roues dentées à denture hélicoïdale, notamment des mortaiseuses à pignon tranchant, avec un outil (10) et une roue à usiner (11), les deux effectuant, couplés électroniquement et entraînés par des moteurs séparés (12, 18), un mouvement développant autour des axes de rotation parallèles, la rotation étant provoquée à l'intermédiaire d'une vis sans fin respective (21, 8) et d'une roue de division respective tournant de façon solidaire avec l'outil (10) et avec la pièce à usiner (11), et l'outil effectuant en plus un mouvement de montée et de descente en composition avec un mouvement de rotation harmonique généré mécaniquement, caractérisée en ce que la valeur de consigne exacte du mouvement de rotation harmonique de l'outil n'est généré mécaniquement que de façon approximative et qu'un premier système de mesure (17) pour le mesurage de la position axiale de l'outil (10) effectuant le mouvement de montée et de descente et un deuxième système de mesure (16) pour le mesurage de la position de la vis correspondante (8) sont prévus, qu'en plus un processeur est prévu qui calcule une position de consigne de la vis (8) en fonction de la position réelle de l'outil (10) effectuant le mouvement de montée et de descente et qui forme un signal de correction correspondant, ce signal étant amené à une unité de commande pour le moteur d'entraînement (20) de la vis (8), ce qui mène à l'augmentation ou réduction correspondante de la vitesse de rotation de la vis (8), de façon à obtenir la position de consigne exacte du mouvement de rotation harmonique de l'outil (10).

2. Machine-outil selon la revendication 1, caractérisée en ce que la vis (8) est logée sur un arbre porte-vis (19) déplaçable axialement et recevant, par transmission à bielle (14) réglable, un mouvement de vaet-vient synchrone au mouvement de montée et de descente de l'outil ou de la pièce à usiner, la course de la transmission à bielle (14) étant dimensionnée de façon que l'action combinée de la vis (8) déplacée axialement et de la roue de division (7) engendre un mouvement de rotation harmonique additif.

3. Machine-outil selon la revendication 1, caractérisée en ce que l'élément effectuant le mouvement de montée et de descente est monté à un arbre (5) qui se déplace dans une douille (6) tournant de façon solidaire avec la roue de division (7) et présentant un guide de coulisse, par lequel un mouvement de rotation harmonique additif de l'arbre (5) est engendré pendant le mouvement de montée et de descente de celui-ci.

4. Machine-outil selon la revendication 2 ou 3, caractérisée en ce que la douille (6) et la vis (8) déplaçable axialement engendrent, par leur action combinée, le mouvement de rotation harmonique additif.

5. Machine-outil selon l'une quelconque des revendications 2 à 4, caractérisée en ce que la transmission à bielle (14) est couplée mécaniquement à l'arbre moteur (1) de la transmission à bielle (3) pour le mouvement de montée et de descente.

6. Machine-outil selon l'une quelconque des revendications 2 à 4, caractérisée en ce que la transmission é bielle (14) est entraînée par un moteur de commande réglable fonctionnant de façon synchrone à l'arbre moteur (1).

FIG. 1

FIG. 2 B

————————— = a )
—·—·—·— = b )
—··—··—··— = c )
—×—×—×— = d )

FIG. 2 A